# EUROPEAN PATENT APPLICATION

(11) **EP 3 496 466 A1**
(43) Date of publication of application: **12.06.2019**
(21) Application number: 18195236.7
(22) Date of filing: 30.12.2006
(51) Int. Cl.: H04W 48/02, H04W 24/02, H04W 28/16

(54) **METHOD AND BASE STATION FOR LICENSE CONTROL IN HSDPA**

(30) Priority: 21.04.2006 CN 200610074476
(62) Divisional of application: 06840745.1
(71) Applicant: Huawei Technologies Co., Ltd., Shenzhen, Guangdong 518129 (CN)
(72) Inventor: Li, Bitao, Shenzhen, Guangdong 518129 (CN)
(74) Representative: Thun, Clemens

(57) **Abstract**

The present invention discloses a method for license control in HSDPA, and the method comprises: controlling a license in HSDPA by controlling at least one of: the number of HSDPA users activated simultaneously in a base station, the number of High Speed Physical Downlink Shared Channel, HS-PDSCH, license codes, a modulation mode of HS-PDSCH, and HSDPA throughput. The present invention also discloses a base station for license control in HSDPA, and the base station comprises: any one or any combination of a user number controlling module, a license code number controlling module, a modulation mode controlling module, a throughput controlling module. The present invention may implement the license control in HSDPA, and therefore the network could be optimized according to requirements of network operators and actual situations of the network.

## Description

### Field of the Invention

The present invention relates to the High Speed Downlink Packet Access (HSDPA) technology, and particularly, to a method and a base station for license control in the HSDPA.

### Background of the Invention

HSDPA is an advanced technology introduced by the 3rd Generation Partnership Project (3GPP) R5, so as to meet the demands of uplink/downlink data service asymmetry. Without changing the network architecture of existing Wideband Code Division Multiple Access (WCDMA), the downlink data rate may be raised to 14 Mbps by the HSDPA technology. Therefore, the HSDPA is a significant technology capable of increasing downlink capacity and downlink data rate in the later stage of WCDMA network construction, and is an enhancement and evolution of the wireless part of the WCDMA.

The HSDPA adds three new channels besides the original physical channel, i.e., the High Speed Physical Downlink Shared Channel (HS-PDSCH), the High Speed Shared Control Channel (HS-SCCH), and the High Speed Dedicated Physical Control Channel (HS-DPCCH).The HS-PDSCH has a fixed spread spectrum factor of 16, uses Quaternary Phase Shift Keying (QPSK) modulation or 16-Quadrature Amplitude Modulation (QAM) and is used for bearing service data of the HSDPA downlink channel. A maximum of 15 HS-PDSCHs can be allocated to each cell, and channel codes of each HS-PDSCH should be continuous. The HS-SCCH with a fixed spread spectrum factor of 128 uses QPSK modulation, and is used for bearing control information for demodulating downlink data of the HS-PDSCH. The HS-DPCCH has a fixed spread spectrum factor of 256 and is used for bearing uplink feedback information related to a downlink HS-PDSCH; the uplink feedback information includes Acknowledgment / Negative Acknowledgment (ACK/NACK) and Channel Quality Indicator (CQI).

In practical applications, equipments provided by various communication equipment manufacturers have different HSDPA support capabilities, and various network operators have different requirements on HSDPA processing capability of equipments. For a network operator, different equipment processing capabilities are required in different stages, i.e., at the early stage of network construction, low equipment processing capacity is required; because the number of customers and the demands for services grow, the requirements of equipment processing capacity are becoming higher and higher. To reduce the investment at the early stage, the network operator generally buys a part of equipment processing capability according to the initial service requirements, and other parts of equipment processing capability will be bought later according to further requirements. The equipment manufacturers control the equipment processing capability by licenses. In this way, the equipment processing capability purchased by the network operator may be clearly identified, so that the network operator may be properly charged.

At present, the equipment processing capability provided to the network operator may be controlled by a license; however, no specific solution is defined in protocols related to the HSDPA to implement license control on a base station.

### Summary of the Invention

Embodiments of the present invention provide a method for license control in the HSDPA, by which the license of a base station supporting the HSDPA may be controlled.

A method for license control in HSDPA includes:
controlling a license in HSDPA by controlling at least one of: the number of HSDPA users activated simultaneously in a base station, the number of High Speed Physical Downlink Shared Channel, HS-PDSCH, license codes, a modulation mode of HS-PDSCH, and HSDPA throughput.

The method further includes:
setting the maximum number of HSDPA users allowed to be activated simultaneously in the base station;
controlling the number of HSDPA users activated simultaneously includes:
   step A1: determining whether there is HSDPA user setup or HSDPA user deletion in the base station; if there is HSDPA user setup, performing step A2; if there is HSDPA user deletion, subtracting one from the number of HSDPA users, updating the number of HSDPA users activated simultaneously in the base station, and performing step A1;
   step A2: determining whether the number of HSDPA users activated simultaneously in the base station plus one is larger than the maximum number of HSDPA users allowed to be activated simultaneously in the base station; if the number of HSDPA users activated simultaneously in the base station plus one is larger than the maximum number of HSDPA users allowed to be activated simultaneously in the base station, refusing the HSDPA user setup and returning to step A1; otherwise, allowing the HSDPA user setup, adding one to the number of HSDPA users activated simultaneously, updating the number of HSDPA users activated simultaneously in the base station, and returning to step A1.

The method further includes:
initializing the number of HSDPA users activated simultaneously in the base station to zero before determining whether there is the HSDPA user setup or the HSDPA user deletion.

Controlling the number of HS-PDSCH license codes includes:
step B1: determining the number of HS-PDSCH license codes allocated to a cell covered by the base station after the changing when a Radio Network Controller, RNC, changes the number of HS-PDSCH license codes of the cell, and determining the sum of the number of HS-PDSCH license codes allocated to other cells covered by the base station after the changing;
B2. determining whether the sum of the number of HS-PDSCH license codes allocated to other cells covered by the base station except the cell and the number of HS-PDSCH license codes allocated to the cell is larger than the number of HS-PDSCH license codes of the base station, if the sum of the number of HS-PDSCH license codes allocated to other cells covered by the base station except the cell and the number of HS-PDSCH license codes allocated to the cell is larger than the number of HS-PDSCH license codes of the base station, making the number of the HS-PDSCH license codes allocated to the cell equal to the difference between the number of HS-PDSCH license codes of the base station and the number of HS-PDSCH license codes allocated to other cells covered by the base station, and returning to step B1; otherwise, making the number of HS-PDSCH license codes allocated to the cell equal to the number of allocated HS-PDSCH license codes after the changing, and returning to step B1.

The method further includes:
allocating HS-PDSCH license codes to each cell covered by the base station according to network planning before determining the number of HS-PDSCH license codes of allocated to the cell covered by the base station after the changing.

Controlling the modulation mode of HS-PDSCH includes:
determining 16-QAM as the modulation mode of HS-PDSCH if a HSPDA license meets the requirements of the 16-QAM.

The method further includes:
setting a throughput threshold of an IUB interface in a measurement period;
wherein controlling the HSDPA throughput comprises:
calculating the HSDPA throughput of the IUB interface in the measurement period after receiving an HSDPA data packet via the IUB interface;
allowing an RNC to send the HSDPA data packet if the HSDPA throughput is less than the throughput threshold of the IUB interface in the measurement period.

The method further includes:
forbidding the RNC to send the HSDPA data packet by a flow control mechanism if the HSDPA throughput is higher than the throughput threshold of the IUB interface in the measurement period.

The embodiments of the present invention also provide a base station for license control in the HSDPA, by which the license of the base station supporting the HSDPA may be controlled.

The base station for license control in HSDPA includes at least one of:
a user number controlling module, adapted to control the number of HSDPA users activated simultaneously in a base station;
a license code number controlling module, adapted to control the number of High Speed Physical Downlink Shared Channel, HS-PDSCH, license codes of a cell covered by the base station;
a modulation mode controlling module, adapted to determine a modulation mode of HS-PDSCH; and
a throughput controlling module, adapted to control HSDPA throughput of an IUB interface between the base station and a Radio Network Controller, RNC.

The user number controlling module includes:
a setting unit, adapted to set the number of HSDPA users allowed to be activated simultaneously in the base station;
a first determining unit, adapted to determine whether there is an HSDPA user change;
a second determining unit, adapted to determine that the HSDPA user change is HSDPA user deletion or HSDPA user setup;
a comparing unit, adapted to determine whether the number of HSDPA users activated simultaneously in the base station plus one is larger than the number of HSDPA users allowed to be activated simultaneously in the base station set by the setting unit if the second determining unit determines that there is the HSDPA user setup;
a calculating unit, adapted to calculating and updating the number of HSDPA users activated simultaneously in the base station according to the determining result of the second determining unit or the comparing result of the comparing unit; and
a processing unit, adapted to process the HSDPA user according the calculating result of the calculating unit.

The license code number controlling module includes:
a code number determining unit, adapted to determine whether the number of HS-PDSCH license codes of a cell covered by the base station changes upon receiving HS-PDSCH license codes of the cell allocated by the RNC;
a code number processing unit, adapted to determine the number of HS-PDSCH license codes allocated to the cell if the code number determining unit determines that the number of HS-PDSCH license codes of the cell changes, determining the sum of the number of HS-PDSCH license codes allocated to other cells covered by the base station;
a code number comparing unit, adapted to determine whether the sum of the number of HS-PDSCH license codes allocated to other cells covered by the base station except the cell and the number of HS-PDSCH license codes allocated to the cell is larger than the number of HS-PDSCH license codes of the base station; and
a code number managing unit, adapted to determine the number of the HS-PDSCH license codes allocated to the cell according to the determining result of the code number comparing unit.

The modulation mode controlling module includes:
a modulation mode determining unit, adapted to determine whether an HSDPA license meets the requirements of 16-QAM;
a modulation mode selecting unit, adapted to determine 16-QAM as the modulation mode of HS-PDSCH according to the determining result of the modulation mode determining unit.

The throughput controlling module includes:
a threshold setting unit, adapted to set a throughput threshold of an IUB interface in a measurement period;
a throughput calculating unit, adapted to calculate the HSDPA throughput of the IUB interface in the measurement period after receiving an HSDPA data packet via the IUB interface;
a throughput comparing unit, adapted to comparing the HSDPA throughput from the throughput calculating unit with the throughput threshold of the IUB interface;
a throughput controlling unit, adapted to control the RNC to or not to send the HSDPA data packet.

With the embodiments of the present invention, it is possible to control the license of the base station. Specifically, the embodiments of the present invention may implement license control in the HSDPA by controlling any one or any combination of the number of HSDPA users activated simultaneously in the base station, the number of HS-PDSCH license codes, the modulation mode of the HS-PDSCH and the HSDPA throughput, therefore network optimization may be implemented according to the requirements of network operators and the actual state of the network.

### Brief Description of the Drawings

Figure 1 is a flowchart illustrating a method for license control by controlling the number of HSDPA users activated simultaneously in a base station in accordance with an embodiment of the present invention.
Figure 2 is a flowchart illustrating a method for license control by controlling the number of HS-PDSCH license codes of a base station in accordance with an embodiment of the present invention.
Figure 3 is a schematic diagram illustrating a base station for license control in HSDPA in accordance with an embodiment of the present invention.

### Detailed Description of the Invention

The present invention is hereinafter described in detail with reference to the accompanying drawings and embodiments to make the object, technical scheme and merits thereof more apparent.

The embodiments of the present invention provide a method for license control in HSDPA by controlling any one or any combination of the number of HSDPA users activated simultaneously in a base station, the number of HS-PDSCH license codes, the modulation mode of HS-PDSCH, or the HSDPA throughput.

The method for license control in the present invention is hereinafter described in detail.

The license control in the HSDPA is achieved by controlling the number of HSDPA users activated simultaneously in the base station.

In a mobile communication network, only a part of all online users need to transmit data during a period of time, e.g., about 30% of all online users in a dense urban area. For a user, the time for data transmission is only a small part of the online duration of the user, e.g. about 14% of the online duration in an internet browsing service. However, even there is no demand for data transmission, the user hopes to be online all the time, therefore, the larger the number of the HSDPA users activated simultaneously and supported by a base station is, the more the advantages of a network operator are, while the larger the number of HSDPA users activated simultaneously by the base station is, the more the resources consumed by the base station are. As can be seen, the license control may be implemented by controlling the number of HSDPA users activated simultaneously and supported by the base station to optimize network configuration.

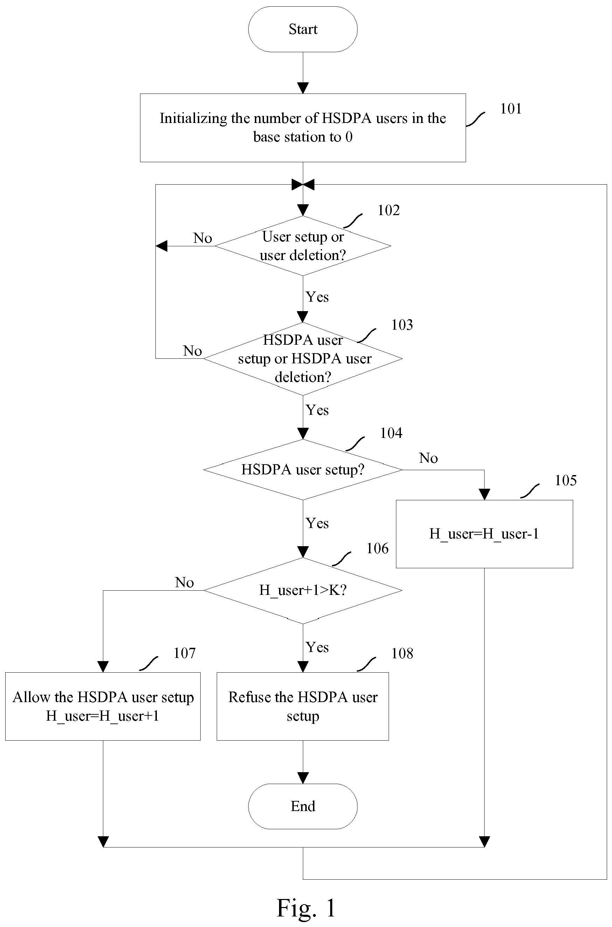

Figure 1 is a flowchart illustrating a method for controlling the number of HSDPA users activated simultaneously in a base station in accordance with an embodiment of the present invention. Provided the maximum number of HSDPA users allowed to be activated simultaneously in the base station is K, as shown in Figure 1, the method for controlling the number of HSDPA users activated simultaneously in the base station in accordance with this embodiment includes as follows.

Block 101: Initialize the number of HSDPA users in the base station to 0.

Blocks 102 to 103: Determine whether there is a user setup or a user deletion in the base station; if there is a user setup or a user deletion, further determine whether the user is an HSDPA user; if the user is an HSDPA user, turn to Block 104, otherwise return to Block 102; if there is no user setup or user deletion, return to Block 102.

The both processes of determining are performed to determine whether there is an HSDPA user setup or an HSDPA user deletion in the base station.

Blocks 104 to 105: Determine whether there is a user setup; if there is a user setup, turn to Block 106; otherwise, update the number of HSDPA users in the base station by subtracting one from the number of HSDPA users, H_user, and return to Block 102.

When an HSDPA user deletion occurs, it is necessary to update the number of HSDPA users in the base station because the number of HSDPA users is decreased by one.

Blocks 106 to 108: Determine whether the number of HSDPA users in the base station plus one is larger than the maximum number K of HSDPA users allowed to be activated simultaneously in the base station; if the number of HSDPA users in the base station plus one is larger than the maximum number K, refuse the HSDPA user setup and return to Block 102; otherwise, allow the HSDPA user setup and update the number of HSDPA users in the base station by adding one to the number of HSDPA users, and return to Block 102.

If the number of HSDPA users in the base station plus one is larger than the maximum number K of HSDPA users allowed to be activated simultaneously in the base station, the base station can not provide services for more HSDPA users, so the HSDPA user setup should be refused. If the HSDPA user setup is allowed, it is necessary to update the number of HSDPA users in the base station because one HSDPA user is added in the base station.

The process for license control in the HSDPA is thus completed by controlling the number of HSDPA users activated simultaneously in the base station according to the embodiment of the present invention.

As can be seen from the above processes, it is proposed to control the number of HSDPA users activated simultaneously in the base station according to the requirements of both users and the base station. If the number of HSDPA users is not larger than the maximum number of HSDPA users supported by the base station, the HSDPA user setup is allowed, so as to meet the requirements of keeping user online. If the number of HSDPA users is larger than the maximum number of HSDPA users supported by the base station, the HSDPA user setup is not allowed. In this way, it is possible to serve a maximum number of HSDPA users if the resources of the network side are sufficient.

In another embodiment of the present invention, the license control in the HSDPA is achieved by controlling the number of HS-PDSCH license codes in a base station.

The number of license codes is the number of HS-PDSCH codes with a license and is an index in the license purchased by a network operator. For a network which supports HSDPA, the larger the number of HS-PDSCH license codes in a base station is, the higher the rate supported by the channel is and the stronger the capability of the base station sending data via an air interface is, the more the resources consumed by the base station are. Therefore, the license control by controlling the number of HS-PDSCH license codes of the base station may be implemented.

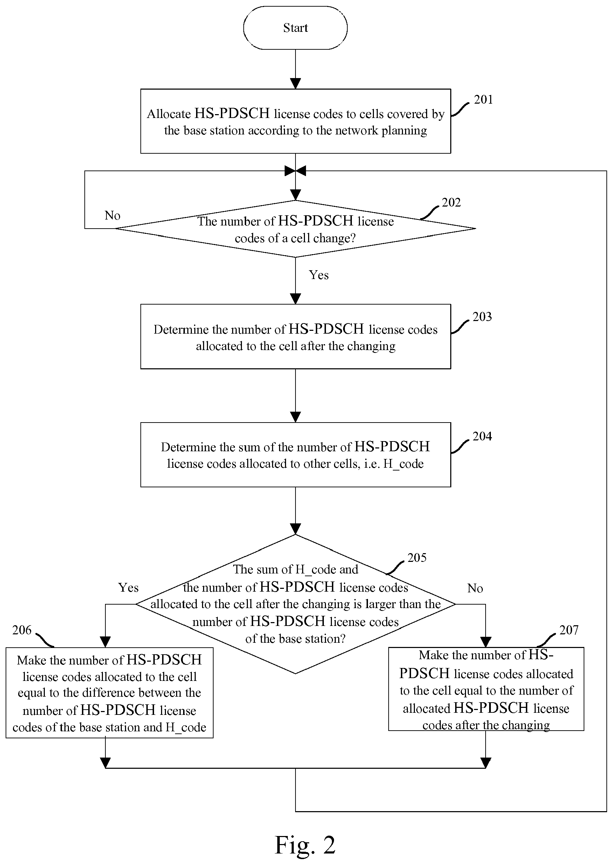

Figure 2 is a flowchart illustrating a method for controlling the number of HS-PDSCH license codes of a base station in accordance with an embodiment of the present invention. As shown in Figure 2, the method for controlling the number of HS-PDSCH license codes in accordance with this embodiment includes as follows.

Block 201: Allocate HS-PDSCH license codes for cells covered by the base station according to the network planning.

In this block, a Radio Network Controller (RNC) allocates HS-PDSCH license codes of the base station to all cells covered by the base station according to the network planning, and the sum of the number of the HS-PDSCH license codes acquired by all cells is the number of allocated HS-PDSCH license codes.

Blocks 202 to 204: Determine whether the RNC changes the number of HS-PDSCH license codes of a cell covered by the base station; if the RNC changes the number of HS-PDSCH license codes of a cell, determine the number of HS-PDSCH license codes allocated to the cell after the changing, and determine the sum of the number of HS-PDSCH license codes allocated to other cells, i.e. H_code, and turn to Block 205; otherwise, return to Block 202.

For example, because a cell which is a sparsely populated area at the early stage of network construction becomes densely populated, the RNC needs to change the number of HS-PDSCH license codes of the cell. However, because the number of HS-PDSCH license codes of the base station is limited, it is necessary to determine the number of HS-PDSCH license codes allocated to the cell after the changing and the sum of the number of HS-PDSCH license codes allocated to other cells except the cell by the assistance of the RNC, so as to provide a basis for the RNC to determine whether it is allowed to perform the process of changing the number of HS-PDSCH license codes of the cell in the following processes.

Blocks 205 to 207: Determine whether the sum of the number of HS-PDSCH license codes allocated to other cells covered by the base station except the cell, i.e. Hcode, and the number of HS-PDSCH license codes allocated to the cell is larger than the number of HS-PDSCH license codes of the base station; if the sum is larger than the number of HS-PDSCH license codes of the base station, make the number of the HS-PDSCH license codes allocated to the cell equal to the difference between the number of HS-PDSCH license codes of the base station and Hcode, and return to Block 202; otherwise, make the number of HS-PDSCH license codes allocated to the cell equal to the number of HS-PDSCH license codes allocated to the cell after the changing, and return to Block 202.

The sum of the number of HS-PDSCH license codes allocated to other cells covered by the base station except the cell, i.e. H_code, and the number of the HS-PDSCH license codes allocated to the cell after the changing is the number of the HS-PDSCH license codes allocated to all cells covered by the base station after the changing. If the number of the HS-PDSCH license codes allocated to all cells covered by the base station after the changing exceeds the number of HS-PDSCH license codes of the base station, the number of HS-PDSCH license codes allocated to the cell after the changing is equal to the difference between the number of HS-PDSCH license codes of the base station and the sum of the number of HS-PDSCH license codes allocated to other cells except the cell. If the number of HS-PDSCH license codes of all cells covered by the base station after the changing does not exceed the number of HS-PDSCH license codes of the base station, it is allowed to change the number of HS-PDSCH license codes of the cell by the RNC.

According to the above-mentioned, the process for license control in HSDPA by controlling the number of HS-PDSCH license codes of the base station according to this embodiment is completed.

As can be seen from the above processes, it is proposed to control the number of HS-PDSCH license codes of each cell covered by the base station, so as to balance the demands of each cell for the number of HS-PDSCH license codes under the condition that the number of HS-PDSCH license codes is limited, so that HS-PDSCH license codes may be provided to the changed cell to the maximum extent when the HS-PDSCH license codes is insufficient in the base station. In this way, a maximum number of HS-PDSCH license codes for a cell may be provided when the resources of the network side are sufficient.

In another embodiment of the present invention, the license control in HSDPA is achieved by controlling the modulation mode.

Table 1 is a mapping table of Channel Quality Indicator (CQI) when the ability level of User Equipment (UE) is 10 specified in 3GPP TS 25.214.

**Table 1**

| CQI value | Size of transmission block | The Number of HS-PDSCH license codes | Modulation mode |
|---|---|---|---|
| 15 | 3319 | 5 | QPSK |
| 16 | 3565 | 5 | 16QAM |
| 17 | 4189 | 5 | 16QAM |
| 18 | 4664 | 5 | 16QAM |
| 19 | 5287 | 5 | 16QAM |
| 20 | 5887 | 5 | 16QAM |
| 21 | 6554 | 5 | 16QAM |
| 22 | 7168 | 5 | 16QAM |

As shown in Table 1, with the same number of HS-PDSCH license codes, the size of transmission block supported by 16-Quadrature Amplitude Modulation (QAM) is larger than the size of transmission block supported by Quaternary Phase Shift Keying (QPSK) modulation. As a result, determine whether a license in the HSDPA meets the requirements of 16-QAM; if the license in the HSDPA meets the requirements of 16-QAM, i.e. if the 16-QAM is supported, select the 16-QAM as a modulation mode; otherwise, select the QPSK modulation as the modulation mode. By controlling the modulation mode, more data may be transmitted with the same number of HS-PDSCH license codes, so that the license capability in HSDPA is improved.

In another embodiment of the present invention, the license control in the HSDPA is achieved by controlling the HSDPA throughput.

In the HSDPA, because a base station is connected to an RNC through an IUB interface, the license control in the HSDPA by controlling the throughput of the IUB interface may be implemented. Specifically, a throughput threshold of the IUB interface in a measurement period is preset; the base station, when receiving a data packet via the IUB interface, calculates the HSDPA throughput of the IUB interface in the present measurement period, and then compares the HSDPA throughput in the present measurement period with the throughput threshold of the IUB interface; if the HSDPA throughput exceeds the throughput threshold, forbid the RNC to transmit data packets by a flow control mechanism; otherwise, allow the RNC to transmit data packets.

In the HSDPA, there is a flow control mechanism for every user in the IUB interface. Specifically, a flow control mechanism may be achieved by sending a flow control allocation frame from the base station to the RNC; the flow control allocation frame may forbid the RNC to send data packets to the base station or to send data packets at a certain rate. Consequently, when detecting that the throughput of the IUB interface reaches the preset throughput threshold, the base station may forbid the RNC to send data packets by the flow control allocation frame. In this way, maximum data may be transmitted when the throughput is allowed.

The above-mentioned is embodiments of the present invention for realizing the license control in the HSDPA by controlling the number of HSDPA users activated simultaneously in a base station, the number of HS-PDSCH license codes, the modulation mode of HS-PDSCH, or the HSDPA throughput. In the practical operation of a network, the license control in the HSDPA may be realized by controlling any one or any combination of the number of HSDPA users activated simultaneously in a base station, the number of HS-PDSCH license codes, the modulation mode of HS-PDSCH, and the HSDPA throughput.

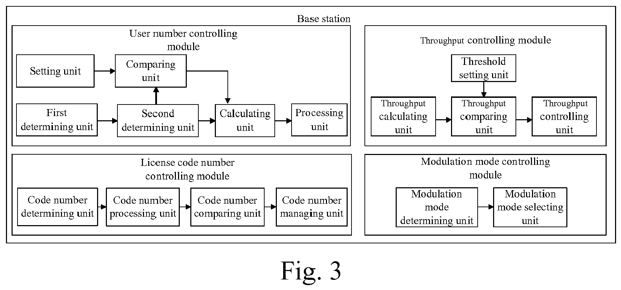

An embodiment of the present invention further provides a base station for license control in the HSDPA, as shown in Figure 3. Figure 3 is a schematic diagram illustrating a base station for license control in the HSDPA in accordance with an embodiment of the present invention. The base station comprises a user number controlling module, a license code number controlling module, a modulation mode controlling module, and a throughput controlling module.

The user number controlling module is used for controlling the number of HSDPA users activated simultaneously in a base station, and includes a setting unit, a first determining unit, a second determining unit, a comparing unit, a calculating unit, and a processing unit.

The setting unit presets the maximum number of HSDPA users allowed to be activated simultaneously in the base station, and transmits the preset maximum number of HSDPA users to the comparing unit, so that the comparing unit performs subsequent processes. The first determining unit determines whether there is an HSDPA user setup or an HSDPA user deletion; if there is an HSDPA user setup or an HSDPA user deletion, the first determining unit notifies the second determining unit; otherwise, the first determining unit continues to determine whether there is an HSDPA user setup or an HSDPA user deletion. The second determining unit determines whether there is an HSDPA user setup after receiving the notification from the first determining unit; if there is an HSDPA user setup, the second determining unit notifies the comparing unit. The comparing unit, after receiving the notification from the second determining unit, determines whether the number of HSDPA users activated simultaneously in the base station plus one is larger than the maximum number of HSDPA users allowed to be activated simultaneously in the base station preset by the setting unit; if larger, the number of HSDPA users activated in the base station keeps unchanged; otherwise, the number of HSDPA users is increased by one and the number of HSDPA users in the base station is updated, and then transmits the calculating result to the processing unit. The processing unit refuses or allows the HSDPA user setup according to the calculation result, i.e., if the number of HSDPA users in the base station plus one is larger than the maximum number of HSDPA users allowed to be activated simultaneously in the base station, refuses the HSDPA user setup; otherwise allows the HSDPA user setup. If the calculating unit determines that there is no HSDPA user setup after receiving the notification from the second determining unit, the calculating unit subtracts one from the number of HSDPA users and updates the number of HSDPA users in the base station.

The number of HSDPA users activated simultaneously in the base station may be controlled by the user number controlling module according to the requirements of both users and the base station. When the number of HSDPA users in the base station does not exceed the maximum number of HSDPA users, it is possible to meet the requirements of users for synchronous online, so that a maximum number of users may be served if the resources of the network side are sufficient.

The license code number controlling module is used for controlling the number of HS-PDSCH license codes of cells covered by the base station, and includes a code number determining unit, a code number processing unit, a code number comparing unit, and a code number managing unit.

According to the network planning, the RNC allocates HS-PDSCH license codes to each cell covered by the base station. The code number determining unit determines whether the number of HS-PDSCH license codes of a cell covered by the base station changes after receiving the HS-PDSCH license codes that the RNC allocates to the cell; if the number of HS-PDSCH license codes changes, the code number determining unit notifies the code number processing unit; otherwise, the code number determining unit continues to determine whether the number of HS-PDSCH license codes of a cell changes. The code number processing unit determines the number of HS-PDSCH license codes of the cell after the number of HS-PDSCH license codes changes, determines the sum of the number of HS-PDSCH license codes allocated to other cells covered by the base station, i.e. H_code, and transmits the result to the code number comparing unit. The code number comparing unit compares the sum of the number of HS-PDSCH license codes allocated to other cells covered by the base station except the cell, i.e. Hcode, and the number of HS-PDSCH license codes of the cell with the number of HS-PDSCH license codes of the base station, and transmits the comparing result to the code number managing unit. If the sum of the number of HS-PDSCH license codes allocated to other cells except the cell and the number of HS-PDSCH license codes of the cell is larger than the number of HS-PDSCH license codes of the base station, the code number managing unit makes the number of HS-PDSCH license codes allocated to the cell equal to the difference between the number of HS-PDSCH license codes of the base station and Hcode; otherwise makes the number of HS-PDSCH license codes allocated to the cell equal to the number of allocated HS-PDSCH license codes after the changing. The number of HS-PDSCH license codes of each cell covered by the base station may be controlled by the license code number controlling module, so that the HS-PDSCH license codes may be provided to the changed cell to the maximum extent when the number of HS-PDSCH license codes is insufficient in the base station. In this way, a maximum number of HS-PDSCH license codes may be provided for a cell if the resources of the network side are sufficient.

The modulation mode controlling module is used for determining the modulation mode of HS-PDSCH, and includes a modulation mode determining unit and a modulation mode selecting unit.

The modulation mode of HS-PDSCH includes QPSK modulation and 16-QAM. With the same number of HS-PDSCH license codes, the size of transmission block supported by the 16-QAM is larger than the size of transmission block supported by the QPSK modulation. Therefore, the modulation mode determining unit determines whether the HSDPA license meets the requirements of the 16-QAM; if the HSDPA license meets the requirements of the 16-QAM, the modulation mode determining unit selects 16-QAM as the modulation mode; otherwise selects QPSK modulation as the modulation mode. In this way, more data may be transmitted with the same number of HS-PDSCH license codes, so that the license capability in HSDPA is enhanced.

The throughput controlling module is used for controlling the throughput of an IUB interface between the base station and the RNC, and includes a threshold setting unit, a throughput calculating unit, a throughput comparing unit, and a throughput controlling unit.

The threshold setting unit sets a throughput threshold of the IUB interface in a measurement period, and transmits the throughput threshold of the IUB interface to the throughput comparing unit. The throughput calculating unit calculates the HSDPA throughput of the IUB interface in the present measurement period when the base station receives one data packet, and transmits the HSDPA throughput to the throughput comparing unit. The throughput comparing unit compares the HSDPA throughput sent from the throughput calculating unit with the throughput threshold of the IUB interface; if the HSDPA throughput exceeds the throughput threshold, the throughput controlling unit forbids the RNC to transmit data packets by a throughput control mechanism; otherwise allows the RNC to transmit data packets.

The throughput controlling unit may forbid the RNC to send data packets to the base station, or to send data packets at a certain rate by a flow control mechanism. In this way, the HSDPA throughput via the IUB interface may be controlled by presetting the throughput threshold, so that it is possible to transmit maximum data when the throughput threshold is not exceeded.

The above-mentioned is only embodiments for realizing license control in HSDPA. In practical applications, the base station may include any one or any combination of the user number controlling module, the license code number controlling module, the modulation mode controlling module, and the throughput controlling module.

The foregoing is only embodiments of the present invention and is not for use in limiting the protection scope thereof. All the modifications, equivalent replacements or improvements in the scope of the present invention's principles should be included in the protection scope of the present invention.

Further embodiments of the present invention are provided in the following. It should be noted that the numbering used in the following section does not necessarily need to comply with the numbering used in the previous sections.

Embodiment 1. A method for license control in High Speed Downlink Packet Access, HSDPA, comprising:
controlling a license in HSDPA by controlling at least one of: the number of HSDPA users activated simultaneously in a base station, the number of High Speed Physical Downlink Shared Channel, HS-PDSCH, license codes, a modulation mode of HS-PDSCH, and HSDPA throughput.

Embodiment 2. The method of Embodiment 1, further comprising:
setting the maximum number of HSDPA users allowed to be activated simultaneously in the base station; wherein
controlling the number of HSDPA users activated simultaneously comprises:
   step A1: determining whether there is HSDPA user setup or HSDPA user deletion in the base station; if there is HSDPA user setup, performing step A2; if there is HSDPA user deletion, subtracting one from the number of HSDPA users, updating the number of HSDPA users activated simultaneously in the base station, and performing step A1;
   step A2: determining whether the number of HSDPA users activated simultaneously in the base station plus one is larger than the maximum number of HSDPA users allowed to be activated simultaneously in the base station; if the number of HSDPA users activated simultaneously in the base station plus one is larger than the maximum number of HSDPA users allowed to be activated simultaneously in the base station, refusing the HSDPA user setup and returning to step A1; otherwise, allowing the HSDPA user setup, adding one to the number of HSDPA users activated simultaneously, updating the number of HSDPA users activated simultaneously in the base station, and returning to step A1.

Embodiment 3. The method of Embodiment 2, further comprising:
initializing the number of HSDPA users activated simultaneously in the base station to zero before determining whether there is the HSDPA user setup or the HSDPA user deletion.

Embodiment 4. The method of Embodiment 1, wherein controlling the number of HS-PDSCH license codes comprises:
step B1: determining the number of HS-PDSCH license codes allocated to a cell covered by the base station after the changing when a Radio Network Controller, RNC, changes the number of HS-PDSCH license codes of the cell, and determining the sum of the number of HS-PDSCH license codes allocated to other cells covered by the base station after the changing;
B2. determining whether the sum of the number of HS-PDSCH license codes allocated to other cells covered by the base station except the cell and the number of HS-PDSCH license codes allocated to the cell is larger than the number of HS-PDSCH license codes of the base station, if the sum of the number of HS-PDSCH license codes allocated to other cells covered by the base station except the cell and the number of HS-PDSCH license codes allocated to the cell is larger than the number of HS-PDSCH license codes of the base station, making the number of the HS-PDSCH license codes allocated to the cell equal to the difference between the number of HS-PDSCH license codes of the base station and the number of HS-PDSCH license codes allocated to other cells covered by the base station, and returning to step B1; otherwise, making the number of HS-PDSCH license codes allocated to the cell equal to the number of allocated HS-PDSCH license codes after the changing, and returning to step B1.

Embodiment 5. The method of Embodiment 4, further comprising:
allocating HS-PDSCH license codes to each cell covered by the base station according to network planning before determining the number of HS-PDSCH license codes of allocated to the cell covered by the base station after the changing.

Embodiment 6. The method of Embodiment 1, wherein controlling the modulation mode of HS-PDSCH comprises:
determining 16-QAM as the modulation mode of HS-PDSCH if a HSPDA license meets the requirements of the 16-QAM.

Embodiment 7. The method of Embodiment 1, further comprising:
setting a throughput threshold of an IUB interface in a measurement period;
wherein controlling the HSDPA throughput comprises:
calculating the HSDPA throughput of the IUB interface in the measurement period after receiving an HSDPA data packet via the IUB interface;
allowing an RNC to send the HSDPA data packet if the HSDPA throughput is less than the throughput threshold of the IUB interface in the measurement period.

Embodiment 8. The method of Embodiment7, further comprising:
forbidding the RNC to send the HSDPA data packet by a flow control mechanism if the HSDPA throughput is higher than the throughput threshold of the IUB interface in the measurement period.

Embodiment 9. A base station for license control in High Speed Downlink Packet Access, HSDPA, comprising at least one of:
a user number controlling module, adapted to control the number of HSDPA users activated simultaneously in a base station;
a license code number controlling module, adapted to control the number of High Speed Physical Downlink Shared Channel, HS-PDSCH, license codes of a cell covered by the base station;
a modulation mode controlling module, adapted to determine a modulation mode of HS-PDSCH; and
a throughput controlling module, adapted to control HSDPA throughput of an IUB interface between the base station and a Radio Network Controller, RNC.

Embodiment 10. The base station of Embodiment 9, wherein the user number controlling module comprises:
a setting unit, adapted to set the number of HSDPA users allowed to be activated simultaneously in the base station;
a first determining unit, adapted to determine whether there is an HSDPA user change;
a second determining unit, adapted to determine that the HSDPA user change is HSDPA user deletion or HSDPA user setup;
a comparing unit, adapted to determine whether the number of HSDPA users activated simultaneously in the base station plus one is larger than the number of HSDPA users allowed to be activated simultaneously in the base station set by the setting unit if the second determining unit determines that there is the HSDPA user setup;
a calculating unit, adapted to calculating and updating the number of HSDPA users activated simultaneously in the base station according to the determining result of the second determining unit or the comparing result of the comparing unit; and
a processing unit, adapted to process the HSDPA user according the calculating result of the calculating unit.

Embodiment 11. The base station of Embodiment 9, wherein the license code number controlling module comprises:
a code number determining unit, adapted to determine whether the number of HS-PDSCH license codes of a cell covered by the base station changes upon receiving HS-PDSCH license codes of the cell allocated by the RNC;
a code number processing unit, adapted to determine the number of HS-PDSCH license codes allocated to the cell if the code number determining unit determines that the number of HS-PDSCH license codes of the cell changes, determining the sum of the number of HS-PDSCH license codes allocated to other cells covered by the base station;
a code number comparing unit, adapted to determine whether the sum of the number of HS-PDSCH license codes allocated to other cells covered by the base station except the cell and the number of HS-PDSCH license codes allocated to the cell is larger than the number of HS-PDSCH license codes of the base station; and
a code number managing unit, adapted to determine the number of the HS-PDSCH license codes allocated to the cell according to the determining result of the code number comparing unit.

Embodiment 12. The base station of Embodiment 9, wherein the modulation mode controlling module comprises:
a modulation mode determining unit, adapted to determine whether an HSDPA license meets the requirements of 16-QAM;
a modulation mode selecting unit, adapted to determine 16-QAM as the modulation mode of HS-PDSCH according to the determining result of the modulation mode determining unit.

Embodiment 13. The base station of Embodiment 9, wherein the throughput controlling module comprises:
a threshold setting unit, adapted to set a throughput threshold of an IUB interface in a measurement period;
a throughput calculating unit, adapted to calculate the HSDPA throughput of the IUB interface in the measurement period after receiving an HSDPA data packet via the IUB interface;
a throughput comparing unit, adapted to comparing the HSDPA throughput from the throughput calculating unit with the throughput threshold of the IUB interface;
a throughput controlling unit, adapted to control the RNC to or not to send the HSDPA data packet.

## Claims

1. A method for license control in High Speed Downlink Packet Access, HSDPA, **characterized by** comprising:
controlling a license in HSDPA by controlling at least one of: the number of HSDPA users activated simultaneously in a base station, the number of High Speed Physical Downlink Shared Channel, HS-PDSCH, license codes, a modulation mode of HS-PDSCH, and HSDPA throughput; wherein the license is used for controlling equipment processing capability provided to a network operator by an equipment manufacturer.

2. The method of Claim 1, further comprising:
setting the maximum number of HSDPA users allowed to be activated simultaneously in the base station; wherein
controlling the number of HSDPA users activated simultaneously comprises:
step A1: determining whether there is HSDPA user setup or HSDPA user deletion in the base station; if there is HSDPA user setup, performing step A2; if there is HSDPA user deletion, subtracting one from the number of HSDPA users, updating the number of HSDPA users activated simultaneously in the base station, and performing step A1;
step A2: determining whether the number of HSDPA users activated simultaneously in the base station plus one is larger than the maximum number of HSDPA users allowed to be activated simultaneously in the base station; if the number of HSDPA users activated simultaneously in the base station plus one is larger than the maximum number of HSDPA users allowed to be activated simultaneously in the base station, refusing the HSDPA user setup and returning to step A1; otherwise, allowing the HSDPA user setup, adding one to the number of HSDPA users activated simultaneously, updating the number of HSDPA users activated simultaneously in the base station, and returning to step A1.

3. The method of Claim 2, further comprising:
initializing the number of HSDPA users activated simultaneously in the base station to zero before determining whether there is the HSDPA user setup or the HSDPA user deletion.

4. The method of Claim 1, wherein controlling the number of HS-PDSCH license codes comprises:
step B1: determining the number of HS-PDSCH license codes allocated to a cell covered by the base station after the changing when a Radio Network Controller, RNC, changes the number of HS-PDSCH license codes of the cell, and determining the sum of the number of HS-PDSCH license codes allocated to other cells covered by the base station after the changing;
B2. determining whether the sum of the number of HS-PDSCH license codes allocated to other cells covered by the base station except the cell and the number of HS-PDSCH license codes allocated to the cell is larger than the number of HS-PDSCH license codes of the base station, if the sum of the number of HS-PDSCH license codes allocated to other cells covered by the base station except the cell and the number of HS-PDSCH license codes allocated to the cell is larger than the number of HS-PDSCH license codes of the base station, making the number of the HS-PDSCH license codes allocated to the cell equal to the difference between the number of HS-PDSCH license codes of the base station and the number of HS-PDSCH license codes allocated to other cells covered by the base station, and returning to step B1; otherwise, making the number of HS-PDSCH license codes allocated to the cell equal to the number of allocated HS-PDSCH license codes after the changing, and returning to step B1.

5. The method of Claim 4, further comprising:
allocating HS-PDSCH license codes to each cell covered by the base station according to network planning before determining the number of HS-PDSCH license codes of allocated to the cell covered by the base station after the changing.

6. The method of Claim 1, wherein controlling the modulation mode of HS-PDSCH comprises:
determining 16-QAM as the modulation mode of HS-PDSCH if a HSPDA license meets the requirements of the 16-QAM.

7. The method of Claim 1, further comprising:
setting a throughput threshold of an IUB interface in a measurement period;
wherein controlling the HSDPA throughput comprises:
calculating the HSDPA throughput of the IUB interface in the measurement period after receiving an HSDPA data packet via the IUB interface;
allowing an RNC to send the HSDPA data packet if the HSDPA throughput is less than the throughput threshold of the IUB interface in the measurement period.

8. The method of Claim7, further comprising:
forbidding the RNC to send the HSDPA data packet by a flow control mechanism if the HSDPA throughput is higher than the throughput threshold of the IUB interface in the measurement period.

9. A base station for license control in High Speed Downlink Packet Access, HSDPA, **characterized in that** the base station is configured to implement a method according to any one of claims 1-8.
